# EUROPÄISCHE PATENTSCHRIFT

(11) **EP 3 352 605 B1**
(45) Veröffentlichungstag und Bekanntmachung des Hinweises auf die Patenterteilung: **19.02.2020**
(21) Anmeldenummer: 16784378.8
(22) Anmeldetag: 23.09.2016
(51) Int. Cl.: A43B 5/04

(54) **SCHUH**
SHOE
CHAUSSURE

(30) Priorität: 24.09.2015 AT 508152015
(43) Veröffentlichungstag der Anmeldung: 01.08.2018
(73) Patentinhaber: Fischer Sports GmbH, 4910 Ried/Innkreis (AT)
(72) Erfinder: PIEBER, Alois, 4910 Ried/Innkreis (AT)
(74) Vertreter: Sonn & Partner Patentanwälte
(86) Internationale Anmeldenummer: PCT/AT2016/060070
(87) Internationale Veröffentlichungsnummer: WO 2017/049330

(56) Entgegenhaltungen:
- EP-A1- 0 903 087
- EP-A1- 1 462 019
- EP-A1- 1 642 706
- EP-A1- 2 620 067
- IT-A1- VI20 090 016

## Beschreibung

Die Erfindung betrifft einen Schuh, insbesondere Skischuh, mit einem schalenförmigen Element, das zumindest teilweise aus einem Kunststoffmaterial besteht, wobei das schalenförmige Element zumindest einen Abschnitt aufweist, in welchem Verstärkungsfasern vorgesehen sind. Weiters betrifft die Erfindung ein Verfahren zur Herstellung eines schalenförmigen Elements für einen Schuh, insbesondere Skischuh, aus einem gespritzten Kunststoffmaterial.

Aus dem Stand der Technik sind grundsätzlich bereits schalenförmige Elemente von Schuhen, insbesondere Ski- oder Eislaufschuhen, bekannt, welche zumindest abschnittsweise mit Verstärkungsfasern ausgestattet sind.

Aus der EP 2 620 067 A1 ist eine Skischuhschale bekannt, bei welcher zumindest abschnittsweise ein folienartiges Fasergebilde vorgesehen ist, dass von dem Kunststoffmaterial des schalenförmigen Elements hinter spritzt ist. Das Fasergebilde besteht aus einer Harzmatrix, insbesondere aus Epoxid oder Phenolharzen.

Aus der EP 1 642 706 A1 ist eine Skischuhschale bekannt, welche ein sehr steifes Material aufweist und ein vergleichsweise weiches Kunststoffmaterial. Das sehr steife Material weist eine thermoplastische Matrize auf, welche mit Glas-, Kohlenstoff, Kevlar- oder Polypropylenfasern verstärkt ist; es können auch sowohl die Schale als auch die Matrix des Fasergebildes aus Polyurethan bestehen.

Weiters sind Skischuhe mit einem schalenförmigen Element mit Verstärkungsfasern aus der EP 1 62 019 A1, der EP 903 87 A1 und der IT VI20 090 016 A1 bekannt.

Aus der GB 1 491 634 ist ein Eislaufschuh und ein Verfahren zur Herstellung dieses Schuhs bekannt, bei welchem zunächst ein dreidimensionales, im Wesentlichen socken- bzw. schlapfenförmiges Faserverstärkungseinlegeteil geformt wird. Dieser Faserverstärkungseinlegeteil wird sodann in eine Spritzgussform eingelegt und in einem weiteren Verfahrensschritt von einem Kunststoffmaterial umspritzt, sodass das vorgeformte dreidimensionale Faserverstärkungsteil vollständig vom Kunststoffmaterial umgeben ist. Die Vorformung des dreidimensionalen Faserverstärkungselements ist nachteiligerweise aufwendig und kostenintensiv.

Aus der AT 510 266 B1 und der AT 510 836 A sind weiters Skischuhe bzw. Herstellungsverfahren bekannt, bei welchen ebenfalls zunächst in einem ersten Schritt ein gesonderter faserverstärkter Versteifungsteil hergestellt wird. Dieser dreidimensionale, formstabile Schuhversteifungsteil wird sodann in eine Spritzgussform eingelegt und in einem zweiten Spritzgussverfahren zu einem fertigen Schalenteil eines Skischuhs geformt. Bei diesem Schuh bzw. diesem Herstellungsverfahren sind somit zwei vollständig voneinander getrennte Spritzgießvorgänge erforderlich. Dies ist nachteiligerweise aufwendig und kostenintensiv.

Andererseits ist z.B. aus der EP 2 881 004 A ein Schalenelement aus einem Faserkompositmaterial bekannt, wobei hier ein oder mehrere Lagen aus einem Kompositmaterial mit Kohlen-, Glas-oder Aramid-Fasern vorgesehen sein können, welche in einem Epoxid-, Phenol- oder Polyesterharz zusammengefasst sind. Bei diesem Schuh ist es weiters erforderlich eine Sohle aus einem elastomeren Werkstoff aufzukleben, was wiederum kostenintensiv und sehr aufwendig ist.

Ziel der vorliegenden Erfindung ist es demzufolge ein faserverstärktes schalenförmiges Element von einem Schuh zu schaffen, das einfach und insbesondere ohne vorhergehende Vorformschritte herstellbar ist.

Dies wird bei dem erfindungsgemäßen Schuh der eingangs angeführte Art durch die Merkmale von Anspruch 1 erzielt.

Demnach ist es erfindungsgemäß nicht erforderlich, die Verstärkungsfasern, welche zur Ausbildung des dreidimensionalen schalenförmigen Elements in einem flexiblen folienartigen, im Wesentlichen planen Fasergebilde, zusammengefasst sind, vorab zu einem dreidimensionalen Gebilde zu formen. Vielmehr wird erfindungsgemäß während der Formgebung des schalenförmigen Elements das zuvor im Wesentlichen zweidimensionale Fasergebilde vom Kunststoffmaterial hinterspritzt und somit mitgeformt, sodass in einem einzigen Herstellungsschritt das schalenförmige Element aus dem Kunststoffmaterial geformt wird, das folienartige Fasergebilde dreidimensional geformt wird und zugleich eine innige, d.h. besonders feste, Verbindung zwischen dem Kunststoffmaterial des schalenförmigen Elements des Schuhs und dem zumindest in einem Abschnitt vorgesehenen folienartigen Fasergebilde erzielt wird. Das Kunststoffmaterial des schalenförmigen Elements und das Fasergebilde sind zwischen 50°C und 130°C thermoverformbar.

Unter Hinterspritzen wird demzufolge in Zusammenhang mit der vorliegenden Erfindung verstanden, dass das flächige Fasergebilde zunächst in die Spritzgussform eingelegt wird, und sodann das flüssige Kunststoffmaterial auf das Fasergebilde - unter Formgebung - gespritzt wird, wodurch sich eine sehr feste Verbindung zwischen Kunststoffmaterial und Fasergebilde ergibt. Zugleich wird während der Verbindung dieser beiden Materialien das Fasergebilde vorteilhafterweise auch dreidimensional geformt und nach Aushärten des Kunststoffmaterials sodann aufgrund der Verbindung mit diesem in der durch die Spritzgussform vorgegebenen Ausgestaltung gehalten.

Um eine effiziente Verstärkung bzw. Versteifung des schalenförmigen Elements zu erzielen, ist es insbesondere vorteilhaft, wenn Carbon-, Glas-, oder Aramid-Fasern als Verstärkungsfasern vorgesehen sind. Durch die Verwendung von Verstärkungsfasern hat das schalenförmige Element als Faser-Kunststoff-Verbund zumindest abschnittsweise ein richtungsabhängiges Elastizitätsverhalten.

Hinsichtlich einer einfachen Handhabung und innigen Verbindung mit dem Kunststoffmaterial des schalenförmigen Elements ist es günstig wenn, die Verstärkungsfasern insbesondere in Form eines Gewebes, Gewirkes, Gestrickes, eines Vlies oder einer Wirrfasermatte gemeinsam mit einer Kunststoffmatrix zu dem folienartigen Fasergebilde zusammengefasst sind. Derartige Fasergebilde - welche vor der Hinterspritzung mit dem Kunststoffmaterial im Wesentlichen zweidimensional bzw. mattenförmig ausgebildet sind - sind vorteilhafterweise als vorimprägnierte Fasermatrixhalbzeuge am Markt erhältlich.

Wenn das folienartige im Wesentlichen plane Fasergebilde eine Materialstärke zwischen 0,1 mm und 1,0 mm aufweist, weist es eine vergleichsweise hohe Flexibilität quer zu seiner Längserstreckungsebene auf. Somit ist sichergestellt, dass das Fasergebilde in Querrichtung zu seiner Längserstreckungsebene gut verformbar ist und sich demnach innig an die Spritzgussform anpasst, sodass zuverlässig die gewünschte Formgebung erzielt wird.

Um ein faserverstärktes, schalenförmiges Element eines Schuhs zu schaffen, welches im angezogenen Zustand des Schuhs - ohne für den Benutzter unangenehm zu werden - warmverformbar ist und zugleich jedoch bei den herkömmlichen Anwendungstemperaturen von Schuhen, insbesondere Skischuhen, d.h. bis zu 50°C ausreichend hohe Steifigkeit aufweist, ist es günstig, wenn das Fasergebilde zwischen 60°C und 100°C thermoverformbar ist. Ebenso ist es aus den vorstehend genannten Zwecken günstig, wenn Kunststoffmaterial zwischen 60°C und 100°C thermoverformbar ist.

Um eine feste bzw. besonders innige Verbindung mit dem Kunststoffmaterial, welches üblicherweise für die Herstellung von Schuhen insbesondere Skischuhen verwendet wird, zu erzielen, und vorzugsweise auch eine Verformung des Foliengebildes unter Wärmeeinwirkung zu ermöglichen, ist es von Vorteil, wenn die Kunststoffmatrix aus einem thermoplastischen Kunststoff, vorzugsweise Polyethylen, insbesondere Polyethylen geringer Dichte (LDPE),thermoplastischem Polyurethanelastomer oder Polyether-Block-Amid besteht.

Um die Anforderungen an das schalenförmigen Element insbesondere in Zusammenhang mit Skischuhen besonders gut zu erfüllen, d.h. eine ausreichende Steifigkeit zu erzielen, andererseits jedoch eine Warmverformbarkeit zwischen 50°C und 130°C zu ermöglichen, ist es von Vorteil, wenn als Kunststoffmaterial vorzugsweise ein Polyurethan- oder Polyamid-Kunststoff-Compound, insbesondere thermoplastisches Polyether, Polyurethanelastomer oder PolyamidElastomer vorgesehen ist. Tests haben gezeigt, dass bei Verwendung eines Polyamid-Compounds als Schalenmaterial folienartige Fasergebilde mit einem Matrixsystem aus Polyethylen oder Polyether-Block-Amid eine hervorragende Materialkompatibilität sicherstellen, während bei Verwendung von thermoplastischem Polyurethanelastomer folienartige Fasergebilde mit einer Matrix aus thermoplastischem Polyurethan oder Polyether-Block-Amid eine hohe Funktionalität ergeben. Es ist auch möglich das folienartige Fasergebilde mehrschichtig, insbesondere zweischichtig aufzubauen, d.h. die Verstärkungsfasern mit einem Matrixsystem, z.B. aus Polyethylen oder Polyamid 12 oder thermoplastischem Polyurethan, zu beschichten und anschließend die Seite, die zum schalenförmigen Bauteil zu liegen kommt, mit einer Haftvermittlerschicht, insbesondere aus Polyether-Block-Amid zu beschichten. Das hat den Vorteil, dass man auf der einen Seite eine sehr harte, kratzfeste Oberfläche erzielt, auf der anderen Seite eine sehr innige Verbindung zum schalenförmigen Bauteil.

Um die ursprüngliche Form eines unteren Schalenelement des Schuhs, welche für die Krafteinleitung von maßgeblicher Bedeutung ist, auch bei der Erwärmung des Schalenelements über die Erweichungstemperatur, im Wesentlichen in der Längserstreckungsebene der Fasern beizubehalten, ist es günstig, wenn ein unteres, den Fuß umschließendes Schalenelement zumindest in einer Zone vor dem Knöchel, insbesondere im Wesentlichen auf Höhe der Mittelfußknochen, medial und/oder lateral, ein folienartiges Fasergebilde aufweist. In jenen Zonen, in welchen ein Fasergebilde vorgesehen ist, kann - bei Erwärmung über die Erweichungstemperatur der Kunststoffmatrix und des Kunststoffmaterials des Schalenelements - somit sehr wohl eine Anpassung der Schale in Richtung senkrecht zu einer Längserstreckungsebene der Fasern erzielt wird, um eine Individualisierung bzw. Anpassung des Schalenelements an den Fuß des Benutzer zu ermöglichen, zugleich jedoch wird eine Ausdehnung des Schalenelements in Richtung der Längserstreckungsebene des Fasergebildes weitgehend hintan gehalten. Somit wird vorteilhafterweise die (Grund-)Geometrie des Schalenelements auch während einer Warmverformung beibehalten. Demzufolge wird im Rahmen der Warmverformung eine Verbesserung des Passkomforts erzielt, ohne hierbei jedoch die hinsichtlich der Krafteinleitung bzw. -übertragung optimierte dreidimensionale Form des Schalenelements maßgeblich negativ zu beeinflussen.

Um insbesondere eine Aufweitung des Schalenelements im Zuge einer Warmverformung in einem oberen Ristabschnitt zu vermeiden, ist es günstig, wenn sich das folienartige Fasergebilde in einem knöchelnahen Abschnitt von einer lateralen/medialen Außenseite stärker in Richtung einer Einstiegsöffnung erstreckt als in einem knöchelfernen Abschnitt.

Um, sofern gewünscht, in jener Zone in welcher das folienartige Fasergebilde vorgesehen ist, teilweise eine Aufweitung des Schalenelements während einer Warmverformung auch in Richtung der Längserstreckungsebene der Fasern zu ermöglichen, ist es vorteilhaft, wenn das folienartige Fasergebilde zumindest einen Einschnitt aufweist.

Das erfindungsgemäße Verfahren der eingangs angeführten Art ist dadurch gekennzeichnet, dass ein Verstärkungsfasern umfassendes flexibles, folienartiges, im Wesentlichen planes Fasergebilde in eine Spritzgussform eingelegt wird und das Fasergebilde von einem Kunststoffmaterial zur Ausbildung eines dreidimensionalen zumindest abschnittsweise faserverstärktem schalenförmigen Element hinterspritzt wird.

Demzufolge ist bei dem erfindungsgemäßen Verfahren - wie bereits vorstehend erläutert - nur ein einziger Verfahrensschritt zur dreidimensionalen Formgebung und Verbindung von Fasergebilde und Kunststoffmaterial erforderlich, indem das flexible folienartige, im Wesentlichen planare Fasergebilde einfach in die Kunststoff-Spritzgussform eingelegt wird, bevor dieses Fasergebilde von dem Kunststoffmaterial hinterspritzt wird und im Rahmen dieser Verbindung mit dem Kunststoffmaterial auch zugleich einem dreidimensionalen Formgebungsprozess unterzogen wird, wobei das Kunststoffmaterial des schalenförmigen Elements und das Fasergebilde zwischen 50°C und 130°C thermoverformbar sind. Somit kann ein erster gesonderter Schritt, in welchem das Fasergebilde gesondert vom Kunststoffmaterial dreidimensional geformt wird, zweckmäßigerweise entfallen.

Nachstehend wird die Erfindung anhand eines bevorzugten Ausführungsbeispiels, auf das die Erfindung jedoch keinesfalls beschränkt sein soll, noch näher erläutert. Im Einzelnen zeigen in den Zeichnungen:
Fig. 1 eine Seitenansicht eines Hartschalen-Alpinskischuhs mit einer faserverstärkten Zone;
Fig. 2 eine Ansicht auf die laterale Seite eines untere Schalenelements eines Hartschalen-Alpinskischuhs; und
Fig. 3 eine Ansicht auf die mediale Seite des unteren Schalenelements gemäß Fig. 2.

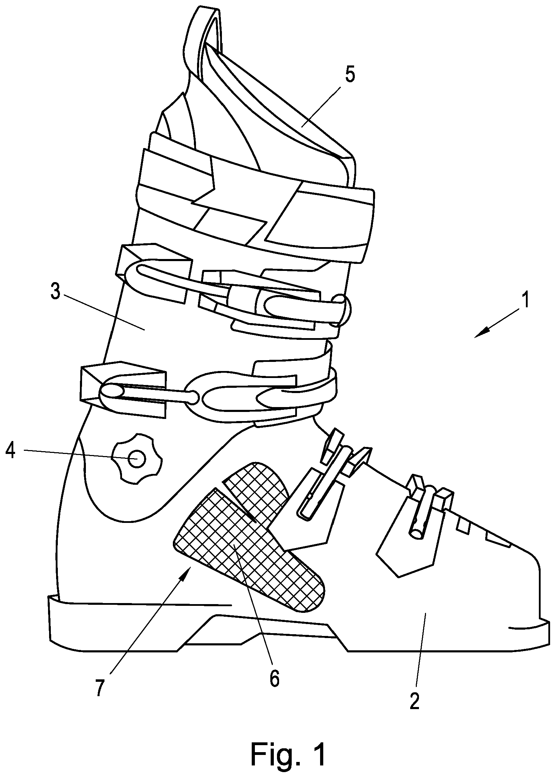

In Fig. 1 ist ein Alpinskischuh 1 gezeigt, welcher ein unteres Schalenelement 2 sowie ein oberes, im Wesentlichen manschettenförmig ausgebildetes Schalenelement 3 aufweist. Das obere Schalenelement 3 ist über ein Gelenk 4 mit dem unteren Schalenelement 2 verbunden.

In diesen aus einem vergleichsweise harten Kunststoff bestehenden schalenförmigen Elementen 2 und 3 ist ein aus einem flexiblen Material bestehender, zumindest abschnittsweise gepolsterter Innenschuh 5 aufgenommen.

Wie weiters in den Figuren ersichtlich sind insbesondere Zonen 7 im unteren Schalenelement 2 mit einem faserverstärkten Foliengebilde 6 versehen.

Jene Bereiche bzw. Zonen 7, in welchen bei dem gezeigten Ausführungsbeispiel das Fasergebilde 6 vorgesehen ist, d.h. Zone welche lateral und medial jeweils vor dem Knöchel angeordnet sind, neigen - ohne Versteifungsfasern - dazu ihre Formgestaltung zu verlieren, wenn das schalenförmige Element 2 zwecks Anpassung an den individuellen Fuß des Benutzers erwärmt wird. Es hat sich aber gezeigt, dass für eine besonders gute Kraftübertragung vom Fuß des Benutzers auf einen mit dem Skischuh verbundenen Ski, insbesondere die Schalengeometrie, d.h. dreidimensionale Ausgestaltung des unteren Schalenelements 2, von herausragender Bedeutung ist.

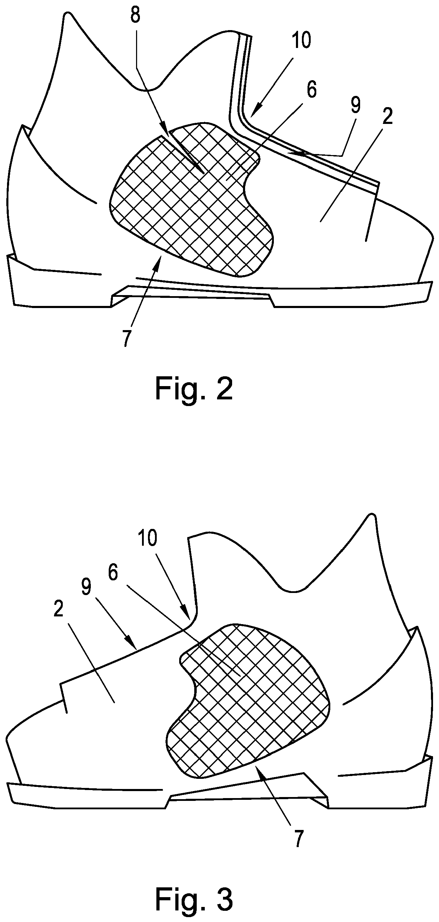

Demzufolge kann durch das Vorsehen von Fasergebilden 6, vorzugsweise in den in den Fig. 2 bis 3 gezeigten Zonen 7, in vorteilhafter Weise erzielt werden, dass das Schalenelement 2 zwar individuell an den Fuß des Benutzers angepasst werden kann, d.h. insbesondere in Richtung senkrecht zur Erstreckungsebene des Schalenelements 2, zugleich wird jedoch mittels der eine deutlich höhere Steifigkeit aufweisenden Fasern, vorzugsweise Aramid-Fasern, die grundsätzliche Geometrie des unteren Schalenelements 2, auch bei Erwärmung des Kunststoffmaterials über die Erweichungstemperatur, d.h. jener Temperatur, bei welcher das Kunststoffmaterial warmverformbar ist, beibehalten. Insbesondere wird eine Aufweitung des Schalenelements 2 in Richtung der Längserstreckungsebene der Fasergebilde 6 somit verhindert.

Besonders vorteilhaft kann hierbei als Kunststoffmaterial ein Kunststoff-Compoundmaterial verwendet werden, welches Hartsegmente aus Polyamid (PA), insbesondere PA 11 oder PA 12, aufweist oder alternativ auch aus Polyurethan (PUR), wobei das Kunststoff-Compoundmaterial vorzugsweise zwischen 50°C und 130°C warmverformbar ist, um eine individuelle Anpassung an den Fuß des Benutzers zu ermöglichen. Dem PA-Hartsegmentanteil kann vorzugsweise eine Mischung aus Caprolactam-Polyamid und Ionomeren hinzu compoundiert werden, um die gewünschte Warmformbarkeit zu erzielen. Im Detail ist dies in der österr. Patentanmeldung AT 510 545 A beschrieben, sodass hinsichtlich bevorzugter Materialzusammensetzungen auf diese Anmeldung verwiesen wird.

Die Fasern des Foliengebildes 6 sind hierbei vorzugsweise in einer Kunststoffmatrix aus einem Polyethylen geringer Dichte (LDPE) eingebettet. Ein derartiges vorimprägniertes Faser-Matrix-Halbzeug wird beispielsweise von E.I. du Pont de Nemours and Company mit eingebetteten Aramid-Fasern unter der Produktbezeichnung AS 400 D 802 vertrieben.

Tests haben gezeigt, dass sich ein derartiges Fasergebilde hervorragend mit einem PA-Kunststoff-Compound hinterspritzen lässt, und somit ein schalenförmiges Element, insbesondere ein unteres Schalenelement 2, einfach herstellen lässt, welches zwischen 50°C und 130°C warmverformbar ist, wobei das Schalenelement 2 während des Warmverformens aufgrund des Vorsehens der Foliengebilde 6 im oberen lateralen und medialen Ristbereich aber seine Grundgeometrie vorteilhafterweise weitgehend beibehält. In jenen Zonen 7, in welchen ein Fasergebilde 6 vorgesehen ist, kann nämlich - bei Erwärmung über die Erweichungstemperatur der Kunststoffmatrix des Foliengebildes 6 und des Kunststoffmaterials - somit sehr wohl eine Anpassung des Schalenelements 2 in Richtung senkrecht zu einer Längserstreckungsebene der Fasern erzielt werden, um eine Individualisierung bzw. Anpassung des Schalenelements 2 an den Fuß des Benutzer zu ermöglichen, zugleich jedoch wird ein Ausdehnung des unteren Schalenelements 2 in Richtung der Längserstreckungsebene des Fasergebildes 6 weitgehend unterbunden.

Da insbesondere eine Aufweitung des untere Schalenelements 2 im Zuge einer Warmverformung in einem oberen Ristabschnitt vermieden werden soll, sind die folienartigen Fasergebilde 6 - wie in Fig. 2 und 3 ersichtlich - in Ansicht im Wesentlichen L-förmig ausgebildet, wobei sich die Fasergebilde 6 in einem knöchelnahen Abschnitt von einer lateralen und medialen Außenseite des Schuhs 1 stärker in Richtung einer Einstiegsöffnung 9 erstrecken als in einem knöchelfernen Abschnitt. Demnach weist das untere Schalenelement 2 in einem Übergangsbereich 10 von einer im Wesentlichen vertikalen auf eine im Wesentlichen horizontale Erstreckung gegenüber den übrigen Abschnitt den verhältnismäßig größten Anteil an Fasergebilde 6 auf, sodass dieser Übergangsbereich 10 während einer Warmverformung des Schalenteils 2 vergleichsweise wenig Anpassungs- bzw. Ausweitungsvermögen aufweist.

Wie in Fig. 1 und 2 ersichtlich, kann teilweise eine lokale Aufweitung des Schalenelements 2 während einer Warmverformung auf einfache Weise zugelassen werden, indem das folienartige Fasergebilde 6 einen Einschnitt 8 aufweist. Bei Einlegen des zweidimensionalen Fasergebildes 6 in eine (nicht näher gezeigte) Spritzgussform können somit die äußeren Randabschnitte benachbart des Einschnitts 8 voneinander entfernt werden, sodass sich ein im Wesentlichen kreissegmentförmiger Abschnitt frei von dem Fasergebilde 6 ergibt. In diesem Fasergebilde-freien Abschnitt kann sich das Schalenelement 2 somit mehr aufweiten als in der angrenzenden Zone 7 mit dem Fasergebilde 6.

Durch das Vorsehen, von lokale in eine Spritzgussform eingelegten - vor der Formgebung - im Wesentlichen zweidimensionalen Fasergebilden 6, kann somit auf einfache Weise insbesondere die Grundgeometrie des schalenförmigen Elements 2 auch während einer Anpassung des schalenförmigen Elements 2 an den Fuß eines Benutzers vorteilhafterweise weitgehend beibehalten werden.

## Patentansprüche

1. Schuh (1), insbesondere Skischuh, mit einem schalenförmigen Element (2, 3), das zumindest teilweise aus einem Kunststoffmaterial besteht, wobei das schalenförmige Element (2, 3) zumindest einen Abschnitt (7) aufweist, in welchem Verstärkungsfasern vorgesehen sind, **dadurch gekennzeichnet, dass** die Verstärkungsfasern vor Ausbildung des schalenförmigen Elements (2, 3) in einem flexiblen, folienartigen, im Wesentlichen planen Fasergebilde (6) zusammengefasst sind und das folienartige Fasergebilde (6) zur Ausbildung eines dreidimensional geformten, abschnittsweise faserverstärkten schalenförmigen Elements (2, 3) von dem Kunststoffmaterial hinterspritzt ist, wobei das Kunststoffmaterial des schalenförmigen Elements (2, 3) und das Fasergebilde (6) zwischen 50°C und 130°C thermoverformbar sind.

2. Schuh nach Anspruch 1, **dadurch gekennzeichnet, dass** Carbon-, Glas-, oder Aramid-Fasern als Verstärkungsfasern vorgesehen sind.

3. Schuh nach Anspruch 1 oder 2, **dadurch gekennzeichnet, dass** die Verstärkungsfasern insbesondere in Form eine Gewebes, Gewirkes, Gestrickes, eines Vlies oder einer Wirrfasermatte gemeinsam mit einer Kunststoffmatrix zu dem Fasergebilde (6) zusammengefasst sind.

4. Schuh nach einem der Ansprüche 1 bis 3, **dadurch gekennzeichnet, dass** das folienartige im Wesentlichen plane Fasergebilde (6) eine Materialstärke zwischen 0,1 mm und 1,0 mm aufweist.

5. Schuh nach einem der Ansprüche 1 bis 4, **dadurch gekennzeichnet, dass** das Fasergebilde (6) zwischen 60°C und 100°C thermoverformbar ist.

6. Schuh nach einem der Ansprüche 1 bis 5, **dadurch gekennzeichnet, dass** das Kunststoffmaterial zwischen 60°C und 100°C thermoverformbar ist.

7. Schuh nach einem der Ansprüche 3 bis 6, **dadurch gekennzeichnet, dass** die Kunststoffmatrix aus einem thermoplastischen Kunststoff, vorzugsweise Polyethylen, insbesondere Polyethylen geringer Dichte (LDPE), thermoplastischem Polyurethanelastomer oder Polyether-Block-Amid besteht.

8. Schuh nach einem der Ansprüche 1 bis 7, **dadurch gekennzeichnet, dass** das folienartige Fasergebilde (6) mehrschichtig, insbesondere zweischichtig, ausgebildet ist.

9. Schuh nach einem der Ansprüche 1 bis 8, **dadurch gekennzeichnet, dass** als Kunststoffmaterial vorzugsweise ein Polyurethan-oder Polyamid-Kunststoff-Compound, insbesondere thermoplastisches Polyether, Polyurethanelastomer oder Polyamidelastomer vorgesehen ist.

10. Schuh nach einem der Ansprüche 1 bis 9, **dadurch gekennzeichnet, dass** ein unteres, den Fuß umschließendes Schalenelement (2) zumindest in einer Zone vor dem Knöchel, insbesondere im Wesentlichen auf Höhe der Mittelfußknochen, medial und/oder lateral, ein folienartiges Fasergebilde (6) aufweist.

11. Schuh nach Anspruch 10, **dadurch gekennzeichnet, dass** sich das folienartige Fasergebilde (6) in einem knöchelnahen Abschnitt von einer lateralen/medialen Außenseite stärker in Richtung einer Einstiegsöffnung (9) erstreckt als in einem knöchelfernen Abschnitt.

12. Schuh nach Anspruch 10 oder 11, **dadurch gekennzeichnet, dass** das folienartige Fasergebilde (6) zumindest einen Einschnitt (8) aufweist.

13. Verfahren zur Herstellung eines schalenförmigen Elements (2, 3) für einen Schuh (1), insbesondere Skischuh, gemäß einem der Ansprüche 1 bis 12 aus einem gespritzten Kunststoffmaterial, **dadurch gekennzeichnet, dass** ein Verstärkungsfasern umfassendes flexibles, folienartiges, im Wesentlichen planes Fasergebilde (6) in eine Spritzgussform eingelegt wird und das Fasergebilde (6) von einem Kunststoffmaterial zur Ausbildung eines dreidimensionalen zumindest abschnittsweise faserverstärktem schalenförmigen Element (2, 3) hinterspritzt wird, wobei das Kunststoffmaterial des schalenförmigen Element (2, 3) und das Fasergebilde (6) zwischen 50°C und 130°C thermoverformbar sind.

## Claims

1. Shoe (1), in particular a ski boot, comprising a shell-like element (2, 3), which at least partially consists of a plastics material, the shell-like element (2, 3) having at least one portion (7) in which reinforcing fibres are provided, **characterised in that** the reinforcing fibres are combined in a flexible, film-like, substantially planar fibre structure (6) before the shell-like element (2, 3) is formed, and the film-like fibre structure (6) is back-moulded from the plastics material to form a three-dimensionally shaped, shell-like element (2, 3) which is fibre-reinforced in portions, the fibre structure (6) and the plastics material of the shell-like element (2, 3) being thermoformable between 50°C and 130°C.

2. Shoe according to claim 1, **characterised in that** carbon fibres, glass fibres, or aramid fibres are provided as reinforcing fibres.

3. Shoe according to either claim 1 or claim 2, **characterised in that** the reinforcing fibres, in particular in the form of a woven fabric, warp knitted fabric, weft knitted fabric, a non-woven fabric or a random fibre mat, are combined together with a plastics material matrix to form the fibre structure (6).

4. Shoe according to any of claims 1 to 3, **characterised in that** the film-like, substantially planar fibre structure (6) has a material thickness of between 0.1 mm and 1.0 mm.

5. Shoe according to any of claims 1 to 4, **characterised in that** the fibre structure (6) is thermoformable between 60°C and 100°C.

6. Shoe according to any of claims 1 to 5, **characterised in that** the plastics material is thermoformable between 60°C and 100°C.

7. Shoe according to any of claims 3 to 6, **characterised in that** the plastics material matrix consists of a thermoplastic material, preferably polyethylene, in particular low density polyethylene (LDPE), thermoplastic polyurethane elastomer or polyether block amide.

8. Shoe according to any of claims 1 to 7, **characterised in that** the film-like fibre structure (6) has multiple layers, in particular two layers.

9. Shoe according to any of claims 1 to 8, **characterised in that** a polyurethane or polyamide-plastics compound, in particular a thermoplastic polyether, polyurethane elastomer or polyamide elastomer, is preferably provided as the plastics material.

10. Shoe according to any of claims 1 to 9, **characterised in that** a lower shell element (2) which encloses the foot has a film-like fibre structure (6), at least in a zone in front of the ankle, in particular substantially at the level of the medial and/or lateral metatarsal bones.

11. Shoe according to claim 10, **characterised in that** the film-like fibre structure (6) extends from a lateral/medial outer face in the direction of an access opening (9) to a greater extent in a portion near the ankle than in a portion away from the ankle.

12. Shoe according to either claim 10 or claim 11, **characterised in that** the film-like fibre structure (6) has at least one incision (8).

13. Method for producing a shell-like element (2, 3) for a shoe (1), in particular a ski boot, according to any of claims 1 to 12 made of an injection-moulded plastics material, **characterised in that** a flexible, film-like, substantially flat fibre structure (6) containing reinforcing fibres is inserted into an injection mould, and the fibre structure (6) is back-injected from a plastics material to form a three-dimensional shell-like element (2, 3) which is fibre-reinforced at least in portions, the fibre structure (6) and the plastics material of the shell-like element (2, 3) being thermoformable between 50°C and 130°C.

## Revendications

1. Chaussure (1), en particulier chaussure de ski, avec un élément en forme de coque (2, 3) qui se compose au moins partiellement d'une matière plastique, l'élément en forme de coque (2, 3) comportant au moins une section (7) dans laquelle sont prévues des fibres de renfort, **caractérisée en ce que** les fibres de renfort sont, avant la formation de l'élément en forme de coque (2, 3), rassemblées en une structure fibreuse (6) flexible, de type feuille, essentiellement plane, et la structure fibreuse (6) de type feuille est surmoulée par injection à partir de la matière plastique pour la formation d'un élément en forme de coque (2, 3) formé de façon tridimensionnelle, renforcé de fibres par endroits, la matière plastique de l'élément en forme de coque (2, 3) et la structure fibreuse (6) étant thermoformables entre 50° C et 130° C.

2. Chaussure selon la revendication 1, **caractérisée en ce que** des fibres de carbone, de verre ou d'aramide sont prévues en tant que fibres de renforcement.

3. Chaussure selon la revendication 1 ou 2, **caractérisée en ce que** les fibres de renforcement, en particulier sous forme de tissu, de tricot, de produit maillé, de voile ou de mat de fibres enchevêtrées, sont réunies conjointement avec une matrice de matière plastique pour donner la structure fibreuse (6).

4. Chaussure selon l'une des revendications 1 à 3, **caractérisée en ce que** la structure fibreuse (6) essentiellement plane de type feuille présente une épaisseur de matériau entre 0,1 mm et 1,0 mm.

5. Chaussure selon l'une des revendications 1 à 4, **caractérisée en ce que** la structure fibreuse (6) est thermoformable entre 60° C et 100° C.

6. Chaussure selon l'une des revendications 1 à 5, **caractérisée en ce que** la matière plastique est thermoformable entre 60° C et 100° C.

7. Chaussure selon l'une des revendications 3 à 6, **caractérisée en ce que** la matrice de matière plastique se compose d'une matière plastique thermoplastique, de préférence de polyéthylène, en particulier de polyéthylène basse densité (LDPE), élastomère de polyuréthane ou polyéther bloc amide thermoplastique.

8. Chaussure selon l'une des revendications 1 à 7, **caractérisée en ce que** la structure fibreuse (6) de type feuille est constituée de plusieurs couches, en particulier de deux couches.

9. Chaussure selon l'une des revendications 1 à 8, **caractérisée en ce que** de préférence un composé de matière plastique polyuréthane ou polyamide, en particulier un polyéther, élastomère de polyuréthane ou élastomère de polyamide thermosplastique est prévu en tant que matière plastique.

10. Chaussure selon l'une des revendications 1 à 9, **caractérisée en ce qu'**un élément de coque (2) inférieur entourant le pied comporte une structure fibreuse (6) de type feuille au moins dans une zone devant la cheville, en particulier essentiellement à la hauteur des os du métatarse, de façon médiale et/ou latérale.

11. Chaussure selon la revendication 10, **caractérisée en ce que**, dans une section proche de la cheville, la structure fibreuse (6) de type feuille s'étend à partir d'un côté extérieur latéral/médial plus fortement dans la direction d'une ouverture d'accès (9) que dans une section éloignée de la cheville.

12. Chaussure selon la revendication 10 ou 11, **caractérisée en ce que** la structure fibreuse (6) de type feuille comporte au moins une entaille (8).

13. Procédé de fabrication d'un élément en forme de coque (2, 3) pour une chaussure (1), en particulier une chaussure de ski, selon l'une des revendications 1 à 12, à partir d'une matière plastique injectée, **caractérisé en ce qu'**une structure fibreuse (6) essentiellement plane, de type feuille, flexible, comprenant des fibres de renforcement est insérée dans un moule d'injection, et la structure fibreuse (6) est surmoulée par injection à partir d'une matière plastique pour la formation d'un élément en forme de coque (2, 3) tridimensionnel renforcé de fibres au moins par endroits, la matière plastique de l'élément en forme de coque (2, 3) et la structure fibreuse (6) étant thermoformables entre 50° C et 130° C.
